# EUROPEAN PATENT APPLICATION

(11) **EP 0 910 013 A2**
(43) Date of publication of application: **21.04.1999**
(21) Application number: 98203456.3
(22) Date of filing: 16.10.1998
(51) Int. Cl.: G06F 9/44

(54) **Date manipulation system**

(30) Priority: 16.10.1997 IE 970753
(71) Applicant: Bray, Manus, Dublin 15 (IE); Chisholm, William, Blessington, Co. Wicklow (IE)
(72) Inventor: Bray, Manus, Dublin 15 (IE); Chisholm, William, Blessington, Co. Wicklow (IE)
(74) Representative: Hanna, Peter William Derek

(57) **Abstract**

This invention provides a temporary solution to the problems that certain computer systems are expected to experience in storing or using any dates beyond 31st December 1999. In particular it provides a system and method for implementing date manipulation, in a computer system for executing application programs (11) or processing data containing date entries where the year is represented by a two digit field. Date manipulation comprises storing date entries within date fields in modified form, subsequently modifying (14) any dates inputted (15) to the system and restoring (13) any stored dates to their pre-modified form when outputting (16) them from the system.

## Description

### Background of the Invention

The present invention relates to computer systems which have or are expected to experience problems in storing any dates beyond the 31st of December 1999 or which would use such dates in calculations. Problems with computers and dates commencing in the year 2000 are well known and are frequently referred to collectively as the 'Millennium Bug'. This invention provides a temporary solution to this well known problem.

In particular this invention relates to a system which provides a "fix" for the "Millennium Bug" problem, by systematically, but temporarily, altering date data stored in existing six digit format, with only two digits representing the year, whether such data is stored in applications programs or databases.

### Description of the Prior Art

Early programmers in designing programs and databases typically used a two digit code or field to represent the years value when storing dates, for example 1998 would he stored as 98 with the century digits 19 removed i.e. no century fields or codes are provided only two digits for the year codes. There were several reasons for storing dates in this way, including the desire to save storage space and to reduce the number of calculations in a program. Few programmers or system designers believed that these early programs would still be in use, all be it modified, 30 years later. Since then many more programs have been written replicating the original methods of storing dates.

Problems are arising and will continue to arise with such systems which have used only two digit codes to represent years on a computer system. Any dates, corresponding to or after the 1st January 2000, entered on a system having only two digits representing a year may result in misleading or erroneous information being produced by a system. For example consider the example of a program comparing the 14th April 1997, which may he stored as 970414, with the 14th April 2007, which would correspondingly be stored as 070414. As the latter number is smaller than the first one the computer will believe that the 14th April 2007 is an earlier date than the 14th April 1997.

This 'Millennium Bug', as the problem of two digit year codes is frequently referred to as, is expected to have a profound effect on most computer systems.

Consider for example a program on a computer manufacturing system using two digit year codes, comparing a food product's 'best by date' with the current date. A product with a shelf life of 10 years made in 1995 should have an expiry date of 2005. however the system when comparing the best by date with the current date of 1998 only compares the year codes, the century codes not being stored on the computer. Therefore the system compares 05 with 98 and concludes that the product is 93 years out of date. It is clear that the operation of such a program may not he relied upon.

The two main solutions to the 'Millennium Bug' problem are at present;
1. rewriting existing software to include the century codes, or
2. writing new software which includes the century codes.

Rewriting the existing software to include an extra digit or two digit code or field to account for the change of century may appear as a simple solution, however typical programs may be over several hundred thousand lines of code long. Estimated costs for rewriting such programs start at US $1 per line of code and the time required to rewrite a piece of software may extend to several years, possibly into the next century effectively making a computer system at best unreliable and more likely unusable. In addition in many cases the original source code is missing and the option of rewriting the software is not available.

Programs have been developed for helping to identify potential problem areas or places where code may need to he changed but as yet no system exists which can automatically analyse a system and correct the software for any deficiencies due to century codes not being stored.

One difficulty in analysing existing databases and computer systems is that a variety of date formats have been used by different programmers and companies. An example of such non standard formats may include a nine character long alpha numeric field covering dates in the form of, for example, "29 Sep 1998". Another example is where systems generate part numbers or invoice numbers based on the current year, followed by a sequential number, accordingly a date type may exist with a year code followed by a 7 digit invoice number. Other examples of non standard formats would include string variables where the date is embedded mid string. However, any systems or tools for identifying dates in code will be unable to identify these types of custom dates.

Another solution is to write new software to replace older programs which would also allow a company to upgrade or replace its existing computer system. However new programs take a considerable length of time and expense to write and test. It is probable that no new large program started now would he ready before the year 2000, without significant cost.

Regardless of the solution chosen, it appears that, without significant expense, it will be difficult for a company using computer database or manufacturing systems, where dates are stored without century codes, to have its computer systems ready for use with 21st century dates.

One further solution has been proposed by Paul O'Neill of The Raytheon Company (Bedford, MA), "The Fifth Millennial Maintenance Conference;" September 22, 1995, Baltimore/Washington International Airport. This solution provides for subtracting a fixed period (ideally 28), from the year value of each data item prior to processing by the system, processing the data and then adding the fixed period to the year value when outputting the data from the system.

"Zone", "historical" and "downdated" are terms used to describe date data having a fixed period subtracted from the year values. Whereas "local" and "real" are terms used to identify data having unchanged year values.

A version of this solution has been suggested by Harvey Alter, WO97/16795. This describes the use of a system where "time change interfaces" convert date data in an external data file from local time to zone time in zone input files so that all dates occur in one century. Application programs process the zone input files using zone time instead of local time.

A significant problem with the downdating approach is that it still requires a programmer to sort through the code to search for places where data is inputted or outputted from the system. A further drawback is that a programmer must manually sort through the details to determine which fields are date fields and which are not.

A further difficulty with the downdating approach is that extensive work will be required to analyse and modify queries on each system. Queries are a method used by computer users to interrogate and extract information from a computer database. An example of a query which might be used by a company accountant is the determination of sales for a particular month. Queries like programs which operate on downdated data will present the user with the year values expressed in downdated format, unless the queries are modified to convert the zone date data into local date data. In addition, criteria having year values may require downdating to maintain functionality. It is quite common for large computer systems to have several thousand queries stored. A programmer will have to review each query individually to determine whether they retrieve dates and whether they require modification. Frequently, a query will be created and used only once. Less frequently, queries are created which are used time and time again. The latter category being of most importance in terms of modification.

On IBM AS400 systems, queries may only be edited and run manually. There is no facility to allow a user to quickly review the details of all queries on the system, rather each query must be reviewed manually by a programmer to assess whether changes are necessary. A programmer is unable to determine whether a particular query is used regularly and worthy of attention or never used and capable of deletion without reviewing that particular query individually. It would be advantageous if a method could be provided for distinguishing between queries using dates which are stored in zone time and queries not using dates stored in zone time and further capable of distinguishing between queries that are frequently used and queries that are used infrequently, without requiring detailed analysis by a programmer.

A frequent concern which exists when making changes to computer systems is that changes may result in erroneous data. Frequently, this can only be determined when the changes or modifications have been implemented and the system is running normally. However this approach typically requires a user to identify possible flaws in the data as it is produced by the system, e.g. on a terminal screen. It would be advantageous, if an automatic method of checking or verifying data could be provided.

A further difficulty implementing downdating/zone time particular to IBM AS400 systems using Report Program Generator (RPG) and Control Language (CL) is the feature of overriding of display or printer files. Occasionally, the CL will overide a call made by an RPG program to a particular printer or display file. This may occur, for example, where the device file name is longer than the name in RPG or where a different panel has been chosen for display, e.g. where a German user is presented with a German language screen rather than an English language screen. A difficulty with overriding is that a programmer going through the RPG code may make modifications to a particular screen, believing it to be the correct one. However, an overriding screen will appear in an unmodified state, and accordingly dates on the screen will appear in a historical setting. Accordingly it would be advantageous to provide a system for detecting where such an override feature is included and deal with it appropriately.

### Brief summary of the Invention

It is an objective of this invention to provide a system for amending existing computer database and manufacturing systems to extend the time period that computer systems will continue to function correctly before experiencing problems with the 'Millennium Bug', thus providing time for decision on and implementation of a permanent solution, e.g. one of the two solutions mentioned above.

This is achieved through the subtraction of a fixed number of years from all dates stored on the computer system, this subtraction increases the time until the dates will reach zero i.e. the century change. By modifying the interface software the user is presented with dates where the year code has the fixed number added to the date so as to be displayed in a current setting. Similarly any dates entered by a user have the fixed number subtracted so as to be in a historical setting before being stored or used by the computer system.

In accordance with the present invention, a method, system and computer product are provided for date manipulation of computer database or manufacturing systems in accordance with the claims which follow.

In a preferred embodiment, the present invention relates to database or manufacturing system's software written in RPG (Report Program Generator) and CL and implemented on IBM AS/400 computers. However the invention may be extended to other computer programming languages and computer systems.

The present invention also provides a method of validating the system after it has been implemented and is running. The invention further provides for a method for dealing with query definition files and also a method for providing a solution to the override display printer files problem.

### Brief Description of the Drawings

The invention will now be described in more detail having regard to the accompanying drawings, in which;
Figure 1 is a pictorial view of a computing system to perform the computer implemented steps in accordance with this invention,
Figure 2 is a block diagram illustrating a computer database or manufacturing system according to the invention,
Figure 3 is an alternative method to that shown in Figure 2, and
Figure 4 is a flow diagram showing the stages of implementation of the invention.

### Detailed Description of the Drawings

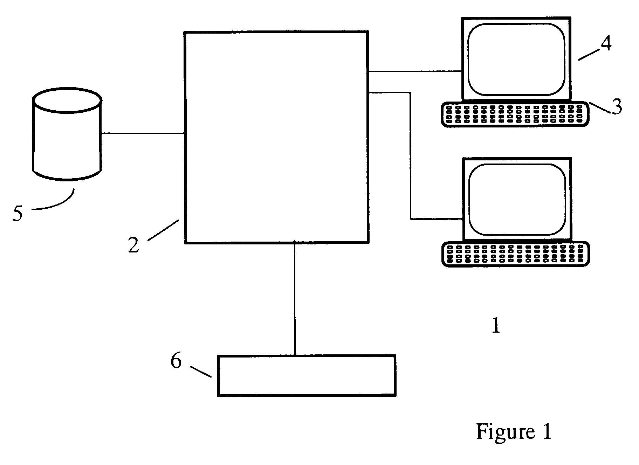

Referring to Figure 1, a computer system, 1, e.g. an IBM AS/400, is shown having a CPU unit, 2, at least one terminal comprising a keyboard, 3, and screen, 4, at least one mass storage device, 5, e.g. a magnetic hard disk and optionally one or more output devices, 6, e.g. printers.

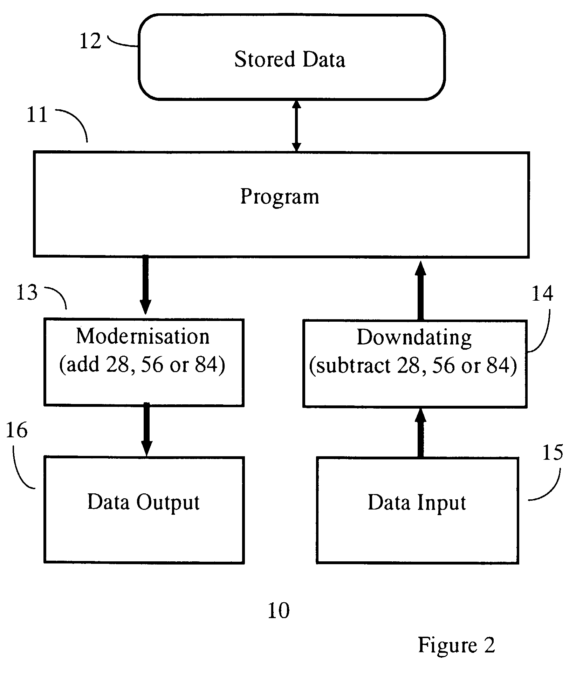

A computer database or manufacturing system according to the prior art is shown in Figure 2, 10, with a program, 11, which uses data ,12, which may be stored in electronic, magnetic or other form. The data includes entries corresponding to dates, these entries having two digit codes or fields representing the year value of the date and having no digits or fields for representing the century value. Each date entry stored as data on the system is stored in a 'historical' setting, i.e. the digits codes or fields representing the year values for each date have been decremented by or had subtracted from them a fixed number.

As the program is using dates which are in an historical setting, any problems arising from the 'Millennium Bug' will be delayed. The duration of the delay is determined by and equal to the fixed number by which the stored date has been downdated.

The preferred value for the fixed number would he 28 years, as this value will ensure that the day of the week relating to a date stored as historical data will correspond to the day of the week relating to the date in a present setting. Other values which would also ensure that the days correspond are 56 and 84 years.

The 'modernisation' block, 13, converts any data corresponding to a date, which is being outputted from the program to an output device e.g. terminal screen, to a present day setting. This conversion is achieved by incrementing, or adding, the fixed number, mentioned above, to the year codes, or fields, of the date data being outputted by the program. Other non date data is left unaffected by the modernisation block and passes directly to the output device.

To ensure that inputted dates will be dealt with correctly by the program they must be 'downdated'. This process of 'downdating', 14, subtracts from, or decrements, the year codes or fields of any inputted date data by the same fixed number as mentioned above.

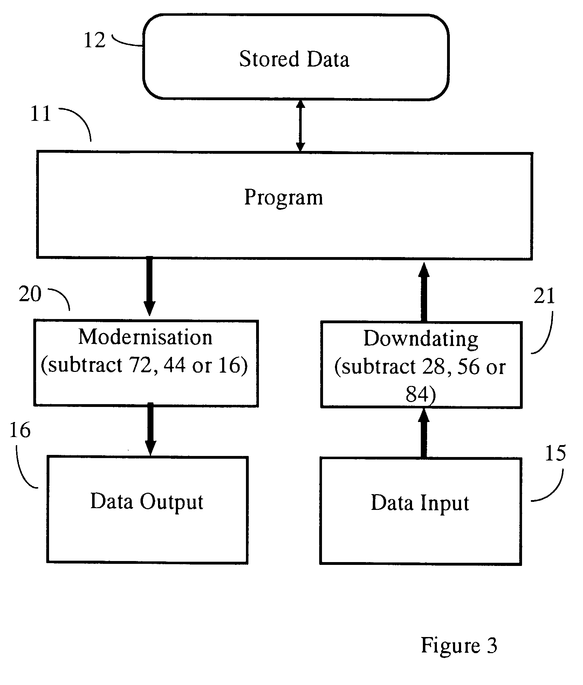

An alternative to the method shown in Figure 2 is illustrated in Figure 3. The difference between the two methods is the manner in which the downdating is implemented. Instead of subtraction by the aforementioned first fixed number, the downdating is achieved by addition of a second fixed number, where the second fixed number is equal to one hundred minus the first fixed number. As there only two digit fields representing the year, the same result is obtained using both methods of downdating. An example will best illustrate this.

Consider a year value in a present setting of 90, using the first method of downdating described above and shown in Figure 2 this would become 62 (90 - 28, where the 28 is used as the fixed number). With the alternate method the fixed number is equal to one hundred minus the number i.e. 100 - 28 = 72. If this figure is added to the year value in the present setting of 90, the result is 162 (90 + 72), However as there is only a two digit field the hundred value (1) is ignored resulting in an answer of 62 as obtained by the first method of downdating.

The method may be reversed for the modernisation process, by re-inserting a hundred value and by subtracting the fixed number, however this is the same mathematically as addition by the first fixed number, for example consider the historical value of 62, if we reinsert the hundreds value we are effectively adding 100 to give 162(62+100), then if we subtract the second fixed number (72) used to modify the number in the first place we obtain 90(162-72). However if we take the entire method as a single mathematical expression we have 62 + 100 - 72 which is the same as 62 + (100-72), which is 62 + 28 i.e. the historical setting value plus the first fixed number.

As mentioned before, other non date data is left unaffected by the modernisation or downdating blocks and passes directly from and to the program.

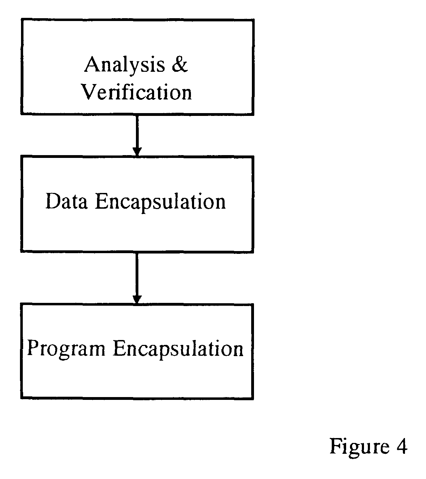

Referring to Figure 4, it is seen that the invention may be implemented in three distinct phases, parts or sections; these are
1. Analysis and Verification,
2. Data Encapsulation, and
3. Program Encapsulation.

The function of the first section "Analysis and Verification" is to determine which fields on the computer system are date fields. The different fields analysed may include database fields (fields on Physical files which contain actual data), screen fields and report fields. The "analysis" section creates an analysis file which is a list of all the fields and attributes codes to each field corresponding to whether the field is a date or not and if so what kind of date.

The analysis of database Physical files may then be checked, by automatic or other means, against actual data file values. The details obtained from this comparison may be reviewed and the analysis file changed accordingly to correct for any errors or mistakes.

The next process, 'Data Encapsulation' downdates any field which contains a year, as identified by the first process of 'analysis and verification'. This `downdating' subtracts from the part of the field corresponding to the year a fixed number of years

The next stage, 'Program Encapsulation', modifies the sections of code of the program relating to the input and output of data. These modifications being such to include the 'modernisation' and 'downdating' processes, as illustrated in Figure 2 and hereinbefore described. The 'Program Encapsulation' uses the analysis file created by the first process of 'Analysis and Verification' to decide which sections of the program code relate to the inputting and outputting of date data. The program encapsulation process may also use the analysis file to determine what modification should be made to the code.

After the three processes have been completed, the computer manufacturing or database system will have its data stored in a historical setting, however a user inputting data to or outputting data from the system will observe all data in a current setting. The storing of the data in a 'historical', or 'downdated', form increases the length of time before a system will experience difficulties with the 'Millennium Bug'.

Although the invention may be carried out in discrete steps by one or more users of a computer system, it will be obvious to anybody skilled in the art that the most appropriate method for implementing this solution to the 'Millennium Bug' is by one or more computer software programs. The invention may he better understood by reference to an embodiment of the invention, implemented as a software program for running on a particular system. The following description relates to computer software written in RPG and CL on an IBM AS/400 machine.

The first section "Analysis & Verification", which is implemented in software, examines all files within the AS/400 database system and determines which fields within the files are used for storing dates.

There are two types of date fields, which the software searches for; date fields containing data and date fields which are used to display or print dates on screens or reports. On AS/400 database systems, the date fields containing data are located in files referred to as 'physical' files and the date fields relating to the display or printing on screens or reports are located in files referred to as 'device' files. Data stored in these two types of files are referred to as physical and device data. A third type of file, referred to as 'field reference files', do not contain data, but are used for reference purposes by physical or device files. Within an AS/400 system database all field specifications are usually referenced back to a main Field Reference File. This is a file, which contains no data, just attributes, for example field length, field type, edit codes and edit words. Another name for a Field Reference files is a data dictionary.

The date fields which contain Physical dates (data) within files in the database will be physically changed by the 'Data Encapsulation' process. The date fields which contain device data will be changed by the 'Program Encapsulation' process.

The 'Analysis and Verification' process begins by identifying date fields in the Field Reference file then the Physical files and finally in the Device files. It is best completed in this order as fields within Device files may be referenced back to Physical files or Field Reference Files for their attributes. Likewise Physical files may be referenced back to Field Reference files for their attributes.

Such attributes may be length, type (i.e. input, output or both; numeric or alpha), edit code used (e.g. edit code Y puts the '/' in dates changing 140497 to 14/04/97), or edit words used (edit words can help identify dates as they put separators in dates e.g. 14-04-97 or 14.04.97).

During analysis, a series of checks are used to determine whether a 2, 4, 5, 6, 7 or 8 numeric field is in fact a date field. These checks look at the length of the field and the edit codes and words to ascertain whether the field is likely to be a date field.

In addition field descriptions are analysed to see if they contain a word that might indicate a date field. Examples of such words include date, expire, year. A further set of words may be used to eliminate the possibility of a field being a date field. Examples of such words include company, number and period.

In the current example each field is allocated an appropriate status code which is stored in a file, called an analysis file. These status codes are in the form of a number or character e.g. in the present example a '2' indicates a field which is definitely a date field, a '9' indicates a field which is definitely not a date field and a '3' indicates a field where it is uncertain whether the field is a date field or not.

A user may then view this file, changing any incorrect status details, and allocating the status '3' fields as either date fields or not i.e. modify the status of '3' to a '2' or a '9'.

Depending on the quality standards used when the original files were created the number of fields allocated a status '3' would typically be very low.

The date format for database fields is typically allocated as Year, Month, and Day. Therefore date formats for varying lengths of date fields on an actual database would generally be implemented as follows;
- 2.0: YY
- 4.0: CCYY
- 5.0: YYWWD
- 6.0: YYMMDD
- 7.0: CYYMMDD
- 8.0: CCYYMMDD
Where Y = Year, C = Century, W = Week, D = Day.

However a facility may be provided in the 'Analysis and Verification' software to allow a user manually change date formats where appropriate). Hence a user might be prompted to input the format their current system uses to display or print dates. This can be one of three formats.
YYMMDD
MMDDYY
DDMMYY

When the formats have been entered then the appropriate date format will be assigned to date fields contained on Device files, i.e. screens or reports. This would be as follows in the case of MMDDYY or DDMMYY;
- 2.0: YY
- 4.0: CCYY
- 5.0: DWWYY
- 6.0: DDMMYY
- 8.0: DDMMCCYY
Where Y = Year, C = Century, W = Week, D = Day.

The location of day or month is not important as it is only the Year which must be downdated or incremented on database files or within a program enhancement.

One difficulty, previously described, is that the format of dates used or the locations in which year codes are placed in a field can vary widely. Several examples of this were illustrated in the description of the prior art. The present invention provides a solution to this problem by enabling a user to create additional custom date formats which may be used in the analysis to identify date fields having non standard date formats and to subsequently allow for their changing automatically. An example of such a custom date field may be a 20 long alpha numeric field where the year code is store alpha numerically rather than numerically and at the location of the sixth and seventh character.

In operation, the analysis section would check for all alpha numeric fields 20 characters long to determine and allocate status codes in the same way as before, including checking field descriptions. This variable method can also be used to accommodate other date formats for example Julian dates or Japanese format dates.

In the current example a report is generated giving the status and Date Format of all Date fields based on the analysis. After reviewing this report, a user may decide there is a requirement to change the analysis of a particular field e.g. CCYY may need to be changed to MMYY depending upon the data it is used to store.

The same analysis, as detailed above, is performed on the physical database files. Where any field is referenced back to the main Field Reference file for its attributes, then the status provided when processing this file, along with its attributes is carried through when writing details to the analysis file. Again a manual review of all analysis may take place after this process, and a report may be printed off and date fields which were allocated a status of '3', modified accordingly.

From the analysis phase, fields have been determined as definite date fields. It is useful to perform a check to confirm that the date fields have been determined correctly, i.e. a process of verification. A way of achieving this is to check actual data values. For example if a field was analysed as being a date field in DDMMYY format and has a value of 230197, It is clear that the analysis is correct for this field. However if this field contained values not consistent with dates, then a program may be used to highlight the analysis of this particular field as inconsistent with the actual data and amend the status code or format accordingly or create an error message so as a user might manually do it.

Programs generated during this 'verification' phase can also be used for changing the date fields into 'Zone-time' ('Zone-time' is the term used to describe data on a file stored in a historical way i.e. downdated by 28 years) later. Any files containing invalid dates will he highlighted by the 'Analysis and Verification' software. This allows a user to view all invalid date details after the Verification process has completed. The user may evaluate if the analysis was incorrect for this field, by looking at the data values for each field. For example if the analysis was a 6 numeric date field in DDMMYY format and value of date field is 971223, the obvious format of this field is YYMMDD, thus it should be changed in the analysis file.

Alternatively some data files may contain incorrect data, for example a date field containing value 123456. This is obviously not a date value and the status in the analysis file should he changed from a '2' to a '9' to indicate this.

By viewing these invalid details a user has an opportunity to clean up and change incorrect data within the database. Another option would allow a user to create a Summary file, which would basically summarise all details from above, giving the names of the fields, files and libraries, where invalid data was found.

The next step undertaken by the software, is to analyse all Device file fields for date fields i.e. any date field which is represented to the user, on a report or screen. The criteria for analysis is exactly the same as for the Database files above. Again if a date on a Device file is referenced back to either the Field Reference file or a Physical file, the status originally allocated will be re-assigned for the field in question on the Device file.

The software may provide a facility to enable a user to manually check this analysis, in order to allocate status '3's to either a status '2' or a status '9'.

Hidden fields are fields used on screens by the software language RPG, to store dates. These fields are never visible to the user, and are just used for internal program processing and therefore never require the modernising to update them back to 'Real-time'. Such date fields are given a status of '8' to indicate this factor and are not used for 'Program Encapsulation'.

Based on the hereinbefore described analysis, each field within a system is given a particular status. A user may view these and if an incorrect status has been given to a particular field, then the user can change the status. The user may change the format of a date field where a particular field has been analysed wrong, e.g. where a file was taken as having a date format of DDMMYY, but where the correct format was YYMMDD. A user may determine by looking at the data in question, for example if a field had a value of 971223, then it is obviously in YYMMDD format.

The alpha fields of device files are analysed to determine whether a field is a date field or not. Occasionally report or screen dates are displayed to the user in character fields of length 8 or 10, format DD/MM/YY or DD/MM/CCYY respectively. Thus for some Device files it may be necessary to check these character fields also. This facility may be provided for by giving a user the option to manually change a field's status during the analysis of reports and/or screens.

The next stage, 'Data Encapsulation', uses fields will have been identified as definite date fields i.e. status '2'. During the Data Encapsulation phase, the software implementing the embodiment will generate computer programs in both RPG and CL. These will he created and run, based upon the previous analysis, to decrement the year in any date field with a status of '2' by a fixed number, preferably 28.

This effective subtraction of all dates on all Physical files within the system will shift the system data to a zone time (historical) setting where each date is relocated by a number of 28 years into the past.

The next stage, 'Program Encapsulation', involves analysing all RPG & CL programs on the computer system for cases where one or more of the following occurs;
- a date is displayed on a screen of an IBM AS/400 terminal by a RPG or CL program,
- a date is printed on a report produced by a RPG program, and
- a system date is requested from the system via an RPG or CL program.

Where one of these events occurs the RPG/CL code of the program in question is changed by adding code just before the display of the field which isolates the year from a date, adds 28 to the year, and rejoins the modified year back to the date. Thus the date displayed by the system has had the fixed number re-inserted thus bringing the date from zone time (historical setting) to present time.

As an example consider the following data 140469, which represents a date of 14th February 1969 but which is in a historical setting i.e. it has had the fixed number in this case 28 years removed.

The first step isolates the part of the date corresponding to the year code 69 from the day and month codes 1404. The next step increments the year code by 28, thus changing the year from 69 to 97. The final step rejoins the day-month codes with the year codes, which results in this case in 140497. This is the date that is displayed on the terminal, thus the user views all dates in a present context whereas all dates remain stored in a historical context.

A similar code manipulation is performed with RPG and/or CL programs where a user enters a date. Code is inserted after segment of code dealing with the entry of the date, which isolates the year from the date, e.g. 140497 becomes 97 and 1404, decrements the year by 28, e.g. 97 becomes 69, and rejoins the year value with the remainder of the date value, taking present example the date value becomes 140469.

The change in the year value by -28 may also be achieved by incrementing the year by 72 when it is two digit long the third digit effectively ignored. For example consider the above example of the year value being 97, adding 72 to this results in 169 however by placing it in a 2 digit field the third digit is ignored resulting in a year value of 69, which may be rejoined to the remainder of the date.

It will be appreciated that to maintain consistency in the system fields which use longer than a two digit year code will also have to he downdated to ensure consistency throughout the system accordingly the extra digits will have to be downdated as well, for example the year value 2002 entered into a four digit date field will require a subtraction of twenty eight from the year code values and also will require decrementing of the century values resulting in a historical value of 1974.

After data has been outputted from the system, it must be reconverted to a historical setting if it is to be used again by the system. The method for performing this conversion is identical to that used for converting a date entered by a user to a historical setting.

The insertion of the pieces of code as previously described into the RPG and/or CL programs ensures that the logic and functionality of the RPG & CL programs are retained.

The previously described approach for dealing with outputting to devices, e.g. when calling a particular screen, includes the steps
identifying the location in code where a call to the screen is located
identifying fields in that screen corresponding to dates having a year value,
inserting a section of code before this location to convert these year values to local time
inserting a section of code after this location to convert these year values back to zone time.

However, if overriding is present, then the user may be presented with a different screen to that listed in the RPG code. This different screen may not use the same date fields and accordingly, there exists the possibility that zone data will be presented to the user rather than local data.

The present invention overcomes this difficulty by;
identifying the location in code where a call to the screen is located,
identifying all possible screens that may be called at said location (whether as normal calls or override screens),
identifying fields in all possible screens corresponding to dates having a year value,
inserting a section of code before this location to convert all of these year values to local time, and
inserting a section of code after this location to convert these year values back to zone time.
For example, if the RPG code identifies a call to "screen0" then the present invention may also identify "screen1" and "screen2" as possible override screens if they exist. By converting all possible date fields that may be required the user is guaranteed to see date data correctly. The approach is similar for dealing with dates inputted to the system.

As mentioned above, query definitions are particularly difficult to deal with. The primary reason for this is that a query definition can not he reviewed in an automatic manner, unlike the way that the RPG and CL programs can he as described above. Each query must be viewed individually by a programmer to determine whether a date is used and in addition to determine whether the query is used on a frequent or infrequent basis. If a query was created a long time ago and has not been used since its initial creation it is unlikely that it will be used again and accordingly may be simply be deleted or ignored. However to determine this requires a programmer to open the query and analyse it. The present invention overcomes this difficulty by using a program available for IBM AS400 systems to convert query definitions to SQL. Following this conversion, the SQL language may be analysed to determine whether any of the fields used in the SQL have previously been identified in the analysis file as date entries. The SQL language may further be analysed to determine when the query was created and when it was last used. This information may he used to create a report identifying which queries have date fields requiring modification. The report may further give an indication of which queries should be prioritised for change based on their creation and usage details. A programmer having such a report will have a reduced number of queries to analyse and modify. For example using the above method on a system having several thousand queries a programmer may determine that only a hundred or so queries require analysis or modifications without having looked at a single query. Using such a method, the time required to modify and/or analyse queries can he dramatically reduced.

A further embodiment is a live validation feature. Typically, once a system has been modified and changes validated, it is put into operation. The only time subsequently that errors in code might be spotted is if a user reports unusual or fake date emerging from the system. As mentioned in the description of the Prior Art this requires vigilant users. The present invention provides a further checking/validation feature. This feature creates one or more programs using the analysis file already described. These programs, which may be run at weekends or other quiet times, check data on the system stored in fields identified in the analysis file as status "2". Accordingly, any new data placed on the system will be checked to ensure that the date stored conform to the format for that field as identified in the analysis file. Any data which does not match the date format will be identified. Upon completion of the verification program, a report of its results may he printed and potential areas needing remedial work identified.

For example, if a date field has a CCYY format then it should not contain any dates in the 21^{st} century as the system is supposed to be downdated. So if the live validation program finds a date value 2005 in such a date field, it will produce an error message for display and/or printing in a report.

This form of part validation acts as a second check for data already downdated and acts as further check for new date data being generated or input to the system. For example, if a screen entry module has not been modified correctly and is not downdating dates entered onto the system, then the post validation programs will detect these dates if they result in data which is inconsistent with a particular data field.

It will be apparent to anybody skilled in the art that a variety of programming methods may be used to write the hereinbefore described embodiments into one or more software programs.

## Claims

1. A method for use with a computer database or manufacturing system, comprising the steps of;
a) creating an analysis file for storing a list of fields, each field having an attribute, said attribute for indicating whether a field contains year values;
b) detecting date fields having year values on the computer manufacturing or database system,
c) allocating an appropriate attribute to fields in the analysis file having year values,
d) decrementing the year values, by a predetermined number, said predetermined number being a multiple of 28, of data entries on the database or manufacturing system in fields having an attribute in the analysis file indicating that the field contains year values,
e) detecting output locations in a system's software,
f) inserting code before each of said output locations to increment the year value of date data as identified by the analysis file,
g) inserting code after each of said output locations to decrement the year value, by said predetermined number, of date data previously modified by step f).
h) detecting input locations in a system's software,
i) inserting code to decrement the year value of date data as identified by the analysis file by said predetermined amount.

2. A method according to claim 1, wherein said step of detecting date fields comprises the step of analysing one or more of the following; field reference, physical or device files, for entries having field descriptions indicating that the field contains a date.

3. A method according to claim 2, wherein said step of detecting date fields further comprises analysing for entries having an appropriate attribute in one or more of the following; field reference, physical or device files, said attributes indicating that the field contains a date.

4. The method according to claims 2 or 3, wherein the user may additionally include custom attribute values or code words, indicative of a date format.

5. The method of claims 3 or 4, wherein said attributes include at least one of the following; length of field, type of field, edit codes or edit words.

6. A method according to any of claims 2 to 5, in which field reference files are analysed first, followed by analysis of the physical files and followed finally by analysis of device files.

7. A method according to any preceding claim, wherein attributes of fields in the analysis file further indicate whether fields containing year values are hidden fields.

8. A method according to claim 7, wherein the step of inserting code before each of said output locations in a system's software ignores fields identified in the analysis file as hidden fields.

9. A method according to any preceding claim, wherein the computer database is implemented on an IBM AS400 computer.

10. A method according to any preceding claim, wherein the system is written using a combination of Report Program Generator (RPG) and Control Language (CL).

11. A method according to any preceding claim further comprising the steps of
a) converting queries to Structured Query Language (SQL),
b) analysing said SQL using the analysis file to determine which queries contain date fields having year values, and
c) generating a report listing which queries contain date fields.

12. A method according to claim 11, further comprising the steps of
a) analysing the SQL to determine the dates of creation and last use of each query,
b) ranking the queries according to a criterion based on the date of creation and the date of last use, and
c) including said ranking in the report listing which queries contain date fields.

13. A method according to claims 10 to 12, wherein the step of inserting code before said output locations to increment the year value of date data, as identified by the analysis file, by said predetermined number, includes fields contained in screens which may override the screen being outputted by the RPG code.

14. A method comprising the step of writing code to validate data identified in the analysis file as containing a year value for use when the database or manufacturing system has been converted by a method according to any preceding claim.

15. A system for use with a computer database or manufacturing system, comprising;
a) means for creating an analysis file for storing a list of fields, each field having an attribute, said attribute for indicating whether a field contains year values;
b) means for detecting date fields having year values on the computer manufacturing or database system,
c) means for allocating an appropriate attribute to fields in the analysis file having year values,
d) means for decrementing the year values, by a predetermined number, said predetermined number being a multiple of 28, of data entries on the database or manufacturing system in fields having an attribute in the analysis file indicating that the field contains year values,
e) means for detecting output locations in a system's software,
f) means for inserting code before each of said output locations to increment the year value of date data as identified by the analysis file,
g) means for inserting code after each of said output locations to decrement the year value, by said predetermined number, of date data previously modified by step f).
h) means for detecting input locations in a system's software, inserting code to decrement the year value of date data as identified by the analysis file by said predetermined amount.

16. A computer program product comprising a computer usable medium having computer readable code embodied therein for implementing a method on a computer database or manufacturing system, said computer program product further comprising:
a) computer readable program code devices configured to cause the computer database or manufacturing system to effect creation of an analysis file for storing a list of fields, each field having an attribute, said attribute for indicating whether a field contains year values;
b) computer readable program code devices configured to cause the computer database or manufacturing system to effect detection of date fields having year values on the computer manufacturing or database system,
c) computer readable program code devices configured to cause the computer database or manufacturing system to effect allocation of an appropriate attribute to fields in the analysis file having year values,
d) computer readable program code devices configured to cause the computer database or manufacturing system to effect a decrementing of the year values, by a predetermined number, said predetermined number being a multiple of 28, of data entries on the database or manufacturing system in fields having an attribute in the analysis file indicating that the field contains year values,
e) computer readable program code devices configured to cause the computer database or manufacturing system to effect detection of output locations in a system's software,
f) computer readable program code devices configured to cause the computer database or manufacturing system to effect insertion of code before each of said output locations to increment the year value of date data as identified by the analysis file,
g) computer readable program code devices configured to cause the computer database or manufacturing system to effect insertion of code after each of said output locations to decrement the year value, by said predetermined number, of date data previously modified by step f).
h) computer readable program code devices configured to cause the computer database or manufacturing system to effect detection of input locations in a system's software,
i) computer readable program code devices configured to cause the computer database or manufacturing system to effect insertion of code to decrement the year value of date data as identified by the analysis file by said predetermined amount.
